# EUROPEAN PATENT SPECIFICATION

(11) **EP 1 531 707 B1**
(45) Date of publication and mention of the grant of the patent: **03.01.2007**
(21) Application number: 03791052.8
(22) Date of filing: 22.08.2003
(51) Int. Cl.: A47J 19/02

(54) **JUICER ARRANGEMENT**
ANORDNUNG FÜR EINEN ENTSAFTER
AGENCEMENT DE PRESSE-FRUITS

(30) Priority: 31.08.2002 GB 0220258
(43) Date of publication of application: 25.05.2005
(73) Proprietor: Kenwood Limited, Havant, Hampshire PO9 2NH (GB)
(72) Inventor: HARDING, John, Havant, Hampshire PO9 2NH (GB)
(74) Representative: Marsh, Robin Geoffrey
(86) International application number: PCT/GB2003/003754
(87) International publication number: WO 2004/019739

(56) References cited:
- EP-A- 0 684 000
- US-A- 5 896 812

## Description

This invention relates to juicer arrangements, and more particularly to juicers intended for the domestic market and comprising motor-driven appliances capable of extracting the juice from fruits, typically citrus fruits, and delivering the juice into a vessel, such as a jug or carafe, that is positioned adjacent the main body of the appliance to receive the juice by way of an outlet duct.

Such appliances typically incorporate one or more filters, configured and located to retain solid, or semi-solid, materials such as pith, partly because the presence of undue amounts of such materials in the prepared juice is considered unpalatable by many users and partly because such materials tend to block outlet ducts, which thus require frequent cleaning.

EP-A-0 684 000 describes such an appliance, wherein a motor-driven grating disc is surmounted by a filter sieve through which juice can pass into a juice receptacle comprising a vessel placed adjacent an outlet of the appliance. Fibrous material resulting from the action of the grating disc does not pass through the filter sieve and is routed to a fibre collecting container.

The general arrangement is well established, can be economically manufactured and works quite well. Difficulties arise however in certain respects, such as ensuring that the juice flows cleanly (i.e. without undue splashing) into the vessel used to receive it, and resisting a tendency for the vessel to be propelled away from the motor-driven appliance, by reactive forces transmitted to the vessel by way of the casing of the motor-driven appliance, when the motor is started. These difficulties are particularly (though not exclusively) associated with centrifugal juicers.

It is an object of this invention to provide a juicing arrangement in which at least one of the above-mentioned difficulties is reduced or overcome.

According to the invention there is provided a juicer arrangement comprising a motor-driven appliance capable of extracting juice from fruit and a vessel for receiving the juice; the appliance having a resiliently-loaded outlet duct for the juice and the vessel having a lid or cover means covering at least a portion of its opening, said lid or cover means being pre-formed with an opening dimensioned and configured to engage with said duct. By this means, the spring-loaded duct inserts at least part way into the opening and delivers the juice cleanly into the vessel.

Preferably, the outlet duct is so configured relative to the said opening that its resilient loading tends to resist movement of the vessel away from the body of the motor-driven appliance. By this means, the vessel can be constrained so as to remain in place despite the tendency for it to be propelled away from the main appliance by reactive forces generated in response to the driving motor being energised.

It is further preferred that the outlet duct comprises a substantially straight and hollow tube supporting an outer collar that is spring-loaded for outward axial motion relative to the tube; the collar and/or the tube being formed with retention means to prevent unwanted disengagement of the collar from the tube. By this means, the required resilience is provided in an efficient and economical manner.

Conveniently, the spring comprises a coiled spring disposed around a portion of said tube and disposed with its inwardly-facing end bearing against a fixed stop. This provides a reliable and robust construction.

Preferably, the tube is angled downwards from the appliance and thus provides a vertical component of resilient force, pressing downwardly on the vessel, when engaged with the opening in the vessel. The vertical component of force resists the aforementioned tendency for the vessel to be propelled away from the appliance.

It is also preferred that the opening in the lid or cover means of the vessel comprises an aperture dimensioned to snugly receive the collar and tube of the outlet duct. This ensures that the juice is delivered into the vessel without splashing.

Preferably too, the vessel and the appliance are designed to present complementary or contrasting appearances, and they may conveniently be shaped so as to interfit with one another. By this means, the design of the two components can be presented as an entity, whereby the use of non-matching vessels with the appliance is discouraged.

In order that the invention may be clearly understood and readily carried into effect, one embodiment thereof will now be described, by way of example only, with reference to the accompanying drawings, of which:

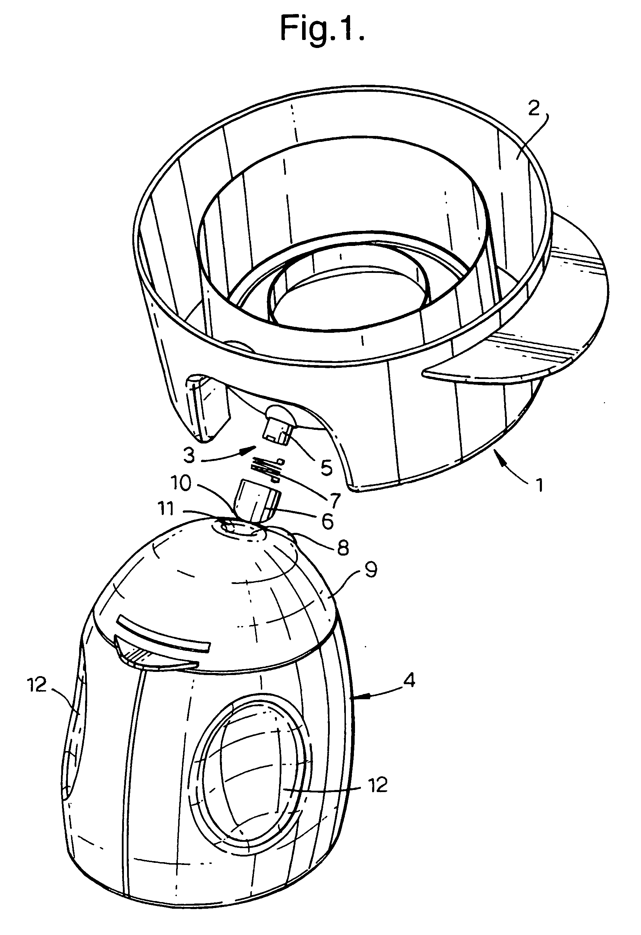

Figure 1 shows, in exploded perspective view, the essential components of a juicer arrangement in accordance with an embodiment of the invention, including the relevant parts of the main appliance, and also a vessel located to receive the juice; and
Figure 2 shows a perspective view of the vessel from a different angle to that shown in Figure 1.

Referring now to the drawings, the arrangement comprises a juicer appliance, part of which is shown generally at 1 and which includes an annular liquid storage area 2 having an outlet duct 3 at a lower region thereof, whereby juice introduced into the area 2 as a result of the juicing action of the appliance can be dispensed into a receiving vessel comprising a jug or carafe 4.

The duct 3 comprises a fixed, hollow inner tube 5, and a mobile collar 6 which can move telescopically to and fro in an axial direction relative to the tube 5, under the influence of a spring 7 which is located and configured to resiliently force the collar 6 outwardly relative to the tube 5, so that its normal tendency is to adopt an extended position relative to the tube 5.

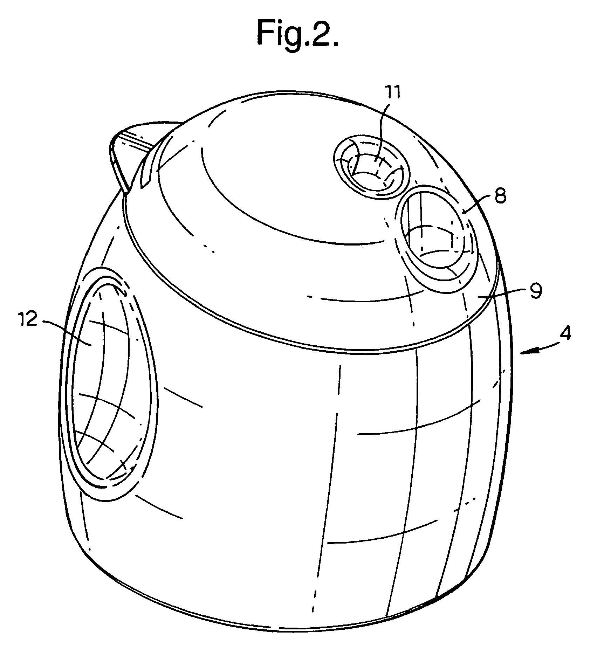

The lid 9 of the vessel 4 is formed with a spout 8 (best seen in Figure 2) and it is further formed, in the vicinity of the spout 8, with an inlet opening 11 which, in this example, is separated from the spout aperture by a small distance. The inlet opening 11 is formed with smoothly tapering walls conforming to a frusto-conical configuration shaped and dimensioned to snugly accommodate the outer end region 10 of the telescopically mobile collar 6.

The arrangement is such that, when the vessel 4 is correctly located relative to the juicer so as to collect juice via the duct 3, the outer region 10 of the collar 6 engages, under the extending influence of the spring 7, into the inlet opening 11 of the vessel 4 and thus fits snugly into that shaped region.

By that means, two important objectives are achieved. First, the clean delivery of juice from the storage chamber 2 of the juicer appliance 1 into the vessel 4 is assured, since the outer region 10 of the collar 6 extends into the opening 11 which is shaped and designed to receive it. Second, the resilient engagement between the outer region 10 of the collar 6 and the vessel 4 ensures that the vessel 4 is not kicked away from the body of the juicer appliance 1 when the motor (not shown) of the appliance 1 is started. In this latter respect, it will be appreciated that, since the forces that tend to kick the vessel away from the appliance 1 tend to be primarily transverse (i.e. lateral of the vessel's base), it is important that the resilient restraining force applied to the vessel by way of the collar 6 of the duct 3 has a sufficient lateral component to resist the kicking forces. In this embodiment of the invention, the application of the desired lateral component of force is achieved by having the axis of the duct 3 (and thus, of course, of the collar 6) orientated at a suitable downward angle to the horizontal.

In this embodiment, the aforesaid downward angle is 49 degrees, but designs utilising alternative angles of depression can be adopted if desired, particularly if, where a lesser angle is adopted, greater spring pressure is employed. Correspondingly, if the angle of depression is greater than that shown, the spring pressure can be reduced.

In the present embodiment, the shaping of the lid 9 in the vicinity of the inlet opening 11 is configured so as to permit the vessel 4, when being slid into place relative to the appliance 1, to engage smoothly with the outer region 10 of the collar 6, and to compress the spring 7, whilst allowing the collar 6 to ride smoothly backwards relative to the fixed tube 5, and then be moved forwards again, under the influence of the spring, into the inlet opening 11, when the vessel 4 is properly located relative to the appliance 1. This arrangement is advantageous in providing tactile assurance for the user that the outer region 10 of the telescopically mobile collar 6 is properly engaged with the vessel.

Any convenient means can be utilised to ensure that the collar 6 of the duct 3 is retained by, but capable of relative axial movement with respect to, the fixed tube 5. In this example, the rearwards end of the collar 6 bears a flange (not shown) extending radially inwards, and the forward end of the tube 5 bears a corresponding flange (not shown) which extends radially outwards, the arrangement being such that the flanges contain respective, cut-outs which, when aligned, permit the flange on the collar 6 to be slid past the flange on tube 5 for assembly. Thereafter, the collar 6 is rotated relative to the tube 5 to misalign the cut-outs such that inter-engagement of the two flanges retains the collar 6 relative to the tube 5.

The collar 6 is preferably retained resiliently in a rotational position relative to tube 5 such that the aforementioned cut-outs remain misaligned, by suitable location of the ends of the spring 7, though a linear channel and a tab, or other means can alternatively or additionally be provided for such retention if preferred.

The vessel 4 may be provided with any convenient means of lifting and carrying it, such as conventional handles which may be moulded integrally with the vessel or attached thereto by bands or in any other conventional manner. In this embodiment, however, the function of a handle is provided economically and in an aesthetically pleasing manner by forming a matched pair of indentations 12 in the upstanding wall of the vessel 4 and on the opposite side of the vessel to the spout 8. The vessel 4 and its contents are sufficiently light in weight that users can readily lift and manipulate the vessel single-handedly, using these indentations, by placing a thumb in one indentation and one or more fingers in the other, and applying slight squeezing pressure to the vessel. The indentations typically have the same surface finish as the remainder of the vessel 4. Where preferred, however, the surface of the vessel may be textured or otherwise roughened in the indented areas in order to increase the friction available for gripping the vessel. In alternative embodiments, cushioned or somewhat resilient pads are provided in the indentations 12; such pads being adherent in any convenient manner to the surface of the vessel.

## Claims

1. A juicer arrangement comprising a motor-driven appliance (1) capable of extracting juice from fruit and a vessel (4) for receiving the juice; the vessel having a lid or cover means (9) covering at least a portion of its opening and the appliance being **characterised by** a resiliently-loaded outlet duct (3) for the juice and by said lid or cover means (9) being pre-formed with an opening (11) dimensioned and configured to engage with said duct (3).

2. An arrangement according to claim 1 wherein the outlet duct (3) is so configured relative to the said opening (11) that its resilient loading tends to resist movement of the vessel (4) away from the body of the motor-driven appliance (1).

3. An arrangement according to claim 1 or claim 2 wherein the outlet duct (3) comprises a substantially straight and hollow tube (5) supporting an outer collar (6) that is spring-loaded for outward axial motion relative to the tube (5); the collar (6) and/or the tube (5) being formed with retention means to prevent unwanted disengagement of the collar from the tube.

4. An arrangement according to claim 3 wherein the spring comprises a coiled spring (7) disposed around a portion of said tube (5) and disposed with its inwardly-facing end bearing against a fixed stop.

5. An arrangement according to claim 3 or claim 4 wherein the tube (5) is angled downwards from the appliance and thus provides a vertical component of resilient force, pressing downwardly on the vessel (4), when engaged with the opening (11) in the lid or cover means (9) of the vessel.

6. An arrangement according to any of claims 3, 4 or 5, wherein the opening (11) in the lid or cover means (9) of the vessel (4) comprises an aperture dimensioned to snugly receive the collar (6) and tube (5) of the outlet duct (3).

7. An arrangement according to any preceding claim wherein the vessel (4) and the appliance (1) are designed to present complementary or contrasting appearances.

8. An arrangement according to claim 7 wherein the vessel (4) and the appliance (1) are shaped so as to interfit with one another.

## Patentansprüche

1. Entsafteranordnung bestehend aus einem motorangetriebenen Gerät (1), das in der Lage ist, Frucht zu entsaften, sowie einem Behälter (4) für die Aufnahme des Safts, wobei das Gerät Deckel- oder Abdeckungsmittel (9) aufweist, die wenigstens einen Teil seiner Öffnung abdecken und das Gerät durch einen nachgiebig druckbeaufschlagt montierten Ablaufkanal (3) für den Saft sowie **dadurch gekennzeichnet** wird, dass das besagte Deckel- oder Abdeckungsmittel (9) vorgeformt und mit einer Öffnung (11) versehen ist, die für das Einrasten mit dem besagten Kanal (3) dimensioniert und konfiguriert ist.

2. Anordnung gemäß Anspruch 1, bei dem der Ablaufkanal (3) relativ zu der besagten Öffnung (11) so konfiguriert ist, dass die nachgiebige Druckbeaufschlagung einer Bewegung des Behälters (4) vom Gehäuse des motorangetriebenen Geräts (1) weg entgegenwirkt.

3. Anordnung gemäß Anspruch 1 oder Anspruch 2, bei dem der Ablaufkanal (3) ein im wesentlichen gerade verlaufendes, hohles Rohr (5) aufweist, das einen äußeren Bund (6) trägt, der für eine Axialbewegung nach außen relativ zum dem Rohr (5) federbelastet ist, wobei der Bund (6) und/oder das Rohr (5) mit Haltemitteln ausgebildet sind, um ein unerwünschtes Ausklinken des Bundes aus dem Rohr zu verhindern.

4. Anordnung gemäß Anspruch 3, bei der die Feder eine um einen Teil des besagten Rohres (5) verlaufende Schraubenfeder (7) umfasst, die mit ihrem nach innen weisenden Ende gegen einen festen Anschlag liegt.

5. Anordnung gemäß Anspruch 3 oder Anspruch 4, bei der das Rohr (5) von dem Gerät nach unten abgewinkelt verläuft und damit eine vertikale Komponente einer nachgiebigen Kraftbeaufschlagung liefert, die nach unten auf den Behälters (4) wirkt, wenn dieser in die Öffnung (11) im Deckel - oder Abdeckungsmittel (9) des Behälters eingerastet ist.

6. Anordnung gemäß einem der Ansprüche 3, 4 oder 5, bei der die Öffnung (11) im Deckel- oder Abdeckungsmittel (9) des Behälters (4) eine Öffnung aufweist, die für die bündige Aufnahme des Bundes (6) und des Rohres (5) des Ablaufkanals (3) dimensioniert ist.

7. Anordnung gemäß einem beliebigen der vorhergehenden Ansprüche, bei der der Behälter (4) und das Gerät (1) so gestaltet sind, dass sie sich mit ihrem Aussehen ergänzen oder in Kontrast zueinander stehen.

8. Anordnung gemäß Anspruch 7, bei der der Behälter (4) und das Gerät (1) so geformt sind, dass sie ineinander passen.

## Revendications

1. Agencement de presse-fruits comportant un appareil à moteur (1) capable d'extraire du jus de fruits et un récipient (4) destiné à recevoir le jus ; le récipient ayant un moyen de type couvercle ou obturateur (9) recouvrant au moins une portion de son ouverture et l'appareil étant **caractérisé par** une conduite de sortie chargée de manière élastique (3) pour le jus et par ledit moyen de type couvercle ou obturateur (9) étant pré-formé avec une ouverture (11) dimensionnée et configurée pour s'engager avec ladite conduite (3).

2. Agencement selon la revendication 1, dans lequel la conduite de sortie (3) est ainsi configurée par rapport à ladite ouverture (11) de telle manière que son chargement de manière élastique a tendance à résister au mouvement du récipient (4) à distance du corps de l'appareil à moteur (1).

3. Agencement selon la revendication 1 ou la revendication 2, dans lequel la conduite de sortie (3) comporte un tube dans une large mesure droit et creux (5) supportant un collier extérieur (6) qui est sous tension de ressort pour un mouvement axial extérieur par rapport au tube (5) ; le collier (6) et / ou le tube (5) étant réalisé avec un moyen de retenue pour empêcher tout désengagement non souhaité du collier par rapport au tube.

4. Agencement selon la revendication 3, dans lequel le ressort comporte un ressort hélicoïdal (7) disposé autour d'une portion dudit tube (5) et disposé avec son extrémité faisant face vers l'intérieur appuyée contre une butée fixe.

5. Agencement selon la revendication 3 ou la revendication 4, dans lequel le tube (5) est incliné vers le bas par rapport à l'appareil et met ainsi en oeuvre un composant vertical de force élastique, qui appuie vers le bas sur le récipient (4), lorsqu'il y a engagement avec l'ouverture (11) dans le moyen de type couvercle ou obturateur (9) du récipient.

6. Agencement selon l'une quelconque des revendications 3, 4 ou 5, dans lequel l'ouverture (11) dans le moyen de type couvercle ou obturateur (9) du récipient (4) comporte un orifice dont les dimensions permettent de recevoir parfaitement le collier (6) et le tube (5) de la conduite de sortie (3).

7. Agencement selon l'une quelconque des revendications précédentes, dans lequel le récipient (4) et l'appareil (1) sont conçus pour présenter des aspects complémentaires ou contrastés.

8. Agencement selon la revendication 7, dans lequel le récipient (4) et l'appareil (1) sont formés de telle manière à correspondre l'un à l'autre.
